# EUROPEAN PATENT APPLICATION

(11) **EP 2 241 654 A2**
(43) Date of publication of application: **20.10.2010**
(21) Application number: 10159368.9
(22) Date of filing: 08.04.2010
(51) Int. Cl.: C23F 11/12, C23F 11/14, C23C 22/68

(54) **Surface-treated metal material excelllent in resistance against galvanic corrosion and joined article of dissimilar materials including the surface-treated metal material**

(30) Priority: 09.04.2009 JP 2009094739
(71) Applicant: Kabushiki Kaisha Kobe Seiko Sho, Hyogo 651-8585 (JP)
(72) Inventor: Sakashita, Shinji, Hyogo Hyogo 651-2271 (JP); Tatsumi, Akihiko, Hyogo Hyogo 651-2271 (JP); Iwai, Masatoshi, Hyogo Hyogo 675-0137 (JP); Hisano, Shoji, Hyogo Hyogo 675-0137 (JP)
(74) Representative: Gillard, Richard Edward

(57) **Abstract**

Disclosed is a surface-treated metal material which includes a metallic base including a steel or aluminum material; and an anti-corrosive layer present covering at least one surface of the metallic base. The anti-corrosive layer contains 0.001 to 1 g/m² of one or more substances selected from the group consisting of benzoic acid salts, glutamic acid salts, anisidines, glycine, and quinolinols. The benzoic acid salts and/or glutamic acid salts are preferably chosen from potassium salt, sodium salt and ammonium salt. Also disclosed is a joined article of dissimilar materials including the surface-treated metal material as at least one of the materials. The surface-treated metal material includes, as the base metal, a steel or aluminum material and is thereby effectively and inexpensively protected from galvanic corrosion without performing electrical insulation or complete atmospheric isolation.

## Description

### FIELD OF THE INVENTION

The present invention relates to surface-treated metal materials, such as steels or aluminum alloys, to be joined in contact with a dissimilar metal; and joined articles of dissimilar materials, which include the surface-treated metal materials. These are adopted typically to transportation vehicles such as automobiles and railway vehicles; machines; civil engineering and construction plants; and electronics.

### BACKGROUND OF THE INVENTION

Demands have been increasingly made to adopt joined members/components of dissimilar metals typically to transportation vehicles such as automobiles and railway vehicles. In these joined members/components, dissimilar metals, such as a steel in combination with an aluminum alloy, are partially joined with each other typically through welding so that they are particularly in contact with each other. However, such dissimilar metals, if in contact with each other, often suffer from galvanic corrosion. The galvanic corrosion is a phenomenon in which a less noble metal being less noble in corrosion potential acts as an anode, and a more noble metal being more noble in corrosion potential acts as a cathode to form a cell (battery), and the less noble metal corrodes preferentially. Typically, when an aluminum alloy is brought into contact with a steel, the aluminum alloy corrodes preferentially. In this case, the aluminum alloy corrodes at a corrosion rate much higher than that of the aluminum alloy in single use and will suffer from damages such as pitting. Accordingly, the galvanic corrosion should be prevented when such members/components, in which dissimilar metals are in contact with each other, are used.

An effective possible solution to prevent the galvanic corrosion is electrical insulation in which an insulator is interposed between dissimilar metals. This technique, however, is difficult to perform because of limitations in the structure or in production. In addition, it is difficult to adopt this technique to welding, although such welding is advantageous in bonding strength between dissimilar metals.

It may be also effective for the prevention of the galvanic corrosion to perform atmospheric isolation so as not to allow water to invade the contact area between dissimilar metals, because water is essential for the progress of corrosion. Typically, Japanese Unexamined Patent Application Publication (JP-A) No. S60(1960)-58272 proposes coating techniques such as coating both a coating material for an anion-permselective film and another coating material for a cation-permselective film. Independently, there are known techniques of using both insulation and atmospheric isolation through coating. For example, Japanese Unexamined Patent Application Publication (JP-A) No. H06(1994)-136295 proposes a technique of adding molybdenum disulfide to a coating material. However, it is actually difficult to prevent the invasion of water into the contact area between dissimilar metals completely over a long period of time even using a coating film prepared from the coating material. This is because even the coating film permeates water to a certain extent, and the coating film, when used in the outdoors, suffers from breakage caused typically by ultraviolet ray degradation or scratching.

There are also proposed techniques of structurally preventing galvanic corrosion. Typically, Japanese Unexamined Patent Application Publication (JP-A) No. 2001-11665 proposes a technique for effectively preventing galvanic corrosion between an aluminum based composite material and a steel by interposing a Zn-Al-Mg alloy between the two materials.

There are also known agents (so-called anticorrosives, corrosion suppressors, or inhibitors) for preventing corrosion of metal materials. These agents are added in small amounts or in trace amounts to the corrosive environment to which the metals are exposed, to reduce the corrosivity of the environment. Examples of generally known inhibitors include sulfites and hydrazine which act as deoxidizers and remove oxygen necessary for corrosion reaction to thereby reduce the corrosivity; calcium ion that forms a precipitated film of calcium carbonate on the surface of a metal to protect the metal more effectively; molybdates that make the surface of a steel be in a passive state and thereby contributes to exhibit corrosion protective effects; inhibitors (such as amines and aniline) that form an absorption coating, which inhibitors have polar groups containing elements with large electronegativity, such as nitrogen (N) and oxygen (O), and the polar groups are adsorbed by the surface of the metal to exhibit corrosion protective effects; inhibitors (such as benzotriazole and thioglycolic acids) that form a precipitation film, in which the inhibitors react with metal ions formed through the dissolution of the metal to form a stable chelate compound on the surface of the metal to thereby exhibit corrosion protective effects; and carboxylic acids that form an oxide film on the surface of the metal. Details of these can be found typically in "Corrosion Handbook", edited by Japan Society of Corrosion Engineering, 1986.

Based on the findings about inhibitors, there are proposed techniques for preventing galvanic corrosion using inhibitors. For example, Japanese Unexamined Patent Application Publication (JP-A) No. H04(1992)-160169 discloses the use of nitrous acid inhibitors and oxyanion inhibitors. These inhibitors, however, are not adoptable to the prevention of galvanic corrosion (contact corrosion) between a steel and an aluminum material less noble in corrosion potential than the steel, although they are effective for the prevention of galvanic corrosion between a carbon steel and a stainless steel or titanium material being more noble in corrosion potential than the carbon steel.

### SUMMARY OF THE INVENTION

The present invention has been made in consideration of such circumstances, and it is an object of the present invention to provide a surface-treated metal material which uses, for example, a steel or aluminum alloy as a metallic base and which can inexpensively and effectively prevent galvanic corrosion even without performing electrical insulation and complete atmospheric isolation. Another object of the present invention is to provide a joined article of dissimilar materials which includes the surface-treated metal material.

As has been described above, the galvanic corrosion is a phenomenon in which a less noble metal and a more noble metal act as an anode and as a cathode, respectively, to thereby form a cell, and the less noble metal corrodes preferentially. The galvanic corrosion proceeds whereas the less noble metal polarizes toward the anode. After investigations to suppress the galvanic corrosion, the present inventors found that known or common anticorrosives (inhibitors) for steels and aluminum alloys do not yield sufficient corrosion protective effects, because the galvanic corrosion proceeds at potentials different from that in single use of such metal materials. They made further intensive investigations on anticorrosives effective for the galvanic corrosion and have found that remarkable corrosion protective effects are obtained by applying benzoic acid salts, glutamic acid salts, anisidines, glycine, and quinolinols alone or in combination to the surface of a contact area between dissimilar metals. The present invention has been made based on these findings.

Specifically, according to an embodiment of the present invention, there is provided a surface-treated metal material which includes a metallic base and an anti-corrosive layer covering the surface of the metallic base, in which the metallic base includes a steel, or pure aluminum or an aluminum alloy (hereinafter such pure aluminum and aluminum alloy are synthetically referred to as "aluminum material(s)"), and the anti-corrosive layer contains a total of 0.001 to 1 g/m² of one or more substances selected from the group consisting of benzoic acid salts, glutamic acid salts, anisidines, glycine, and quinolinols (hereinafter these substances also referred to as "specific substance(s)").

The surface-treated metal material includes the anti-corrosive layer containing 0.001 to 1 g/m² of one or more substances selected from the group consisting of benzoic acid salts, glutamic acid salts, anisidines, glycine, and quinolinols. The specific substances act on the surface of a less noble metal to form an oxide film or a precipitated film, or a mixed film of them to thereby reduce the dissolution rate of the less noble metal. In this process, the less noble metal of one of the metallic base of the surface-treated metal material and the counterpart metal material is less noble in corrosion potential, and polarizes toward the anode. Typically, when the metallic base of the surface-treated metal material is a steel, and the counterpart metal material is less noble in corrosion potential than the steel, an oxide film or another film is formed on the surface of the less noble counterpart metal material to suppress the galvanic corrosion. When the metallic base of the surface-treated metal material is an aluminum material, and the counterpart metal material is more noble in corrosion potential than the aluminum material, an oxide film or another film is formed on the surface of the aluminum material to suppress the galvanic corrosion. The specific substances also act to reduce the difference in potential between dissimilar metals in contact with each other. This effect acts synergistically with the formation effect of an oxide film or another film and thereby effectively suppresses the corrosion current between the dissimilar metals in contact with each other to thereby suppress the galvanic corrosion more effectively.

The benzoic acid salts and/or glutamic acid salts to constitute the anti-corrosive layer of the surface-treated metal material are preferably ones selected from potassium salt, sodium salt, and ammonium salt. The anti-corrosive layer, when containing any of these salts, more effectively helps to reduce the dissolution rate of the less noble metal. This is because the potassium salt, sodium salt, and ammonium salt are more soluble in water than other salts such as calcium salt and can thereby form a more uniform oxide film or precipitated film.

The steel, when constituting the metallic base of the surface-treated metal material, can be a zinc-containing plated steel which includes a steel and a zinc-containing plated layer covering at least one surface of the steel. In this case, the anti-corrosive layer is formed on or above the zinc-containing plated layer. The zinc-containing plated layer preferably contains zinc (Zn) in a content of 40% or more and preferably has a mass of coating of from 1 to 150 g/m². The zinc-containing plated steel, when used as the metallic base, helps to further reduce the difference in potential with a less noble counterpart metal material as compared to that of a bare steel having no zinc-containing plated layer. Thus, the plated steel can further reduce the rate of corrosion caused by contact between dissimilar metals. These effects are synergistic effects of the zinc-containing plated layer and the anti-corrosive layer relating to the present invention.

According to another embodiment of the present invention, there is provided a joined article of dissimilar materials, which includes a surface-treated metal material and a counterpart metal material at least partially joined with the surface-treated metal material. The surface-treated metal material is the surface-treated metal material according to the present invention. When the metallic base of the surface-treated metal material is a steel, the counterpart metal material is a metal less noble in corrosion potential than the steel. When the metallic base of the surface-treated metal material is an aluminum material, the counterpart metal material is a metal more noble in corrosion potential than the aluminum material. The counterpart metal material is arranged adjacent to the anti-corrosive layer of the surface-treated metal material, and the counterpart metal material is electrically continuously joined with the metallic base of the surface-treated metal material.

In the joined article of dissimilar materials, one of the two dissimilar materials includes the surface-treated metal material according to an embodiment of the present invention. The joined article can thereby give a structure excellent in anti-corrosion properties and durability, because the anti-corrosive layer of the surface-treated metal material prevents a metal being less noble than the other from galvanic corrosion, which less noble metal is selected from the metallic base of the surface-treated metal material and the counterpart metal material.

Though not limited, a metal for use as the less noble metal in the joined article of dissimilar materials can for example be an aluminum material, a magnesium alloy, or a zinc alloy. Also though not limited, a metal for use as the more noble metal in the joined article of dissimilar materials can for example be an aluminum material or a steel.

According to still another embodiment of the present invention, there is provided another joined article of dissimilar materials, which includes a first surface-treated metal material and a second surface-treated metal material at least partially joined with the first surface-treated metal material. The first surface-treated metal material is a surface-treated metal material according to an embodiment of the present invention, including a steel as the metallic base. The second surface-treated metal material is a surface-treated metal material according to another embodiment of the present invention, including an aluminum material as the metallic base. The anti-corrosive layer of the second surface-treated metal material is arranged adjacent to the anti-corrosive layer of the first surface-treated metal material so that the two anti-corrosive layers are in contact with or face with each other. The first metallic base of the first surface-treated metal material is electrically continuously joined with the second metallic base of the second surface-treated metal material.

This joined article of dissimilar materials according to another embodiment of the present invention can give excellent anti-corrosion properties and superior durability, because the aluminum material constituting the metallic base of the second surface-treated metal material is protected from the galvanic corrosion by the action of the double anti-corrosive layers of the first and second surface-treated metal materials, which aluminum material is less noble in corrosion potential than the steel constituting the metallic base of the first surface-treated metal material.

The surface-treated metal materials and joined articles of dissimilar materials according to embodiments of the present invention excel in anti-corrosion properties against galvanic corrosion and in durability and are thereby advantageously usable as materials for automotive members.

The surface-treated metal materials according to embodiments of the present invention each include a metallic base and an anti-corrosive layer present on at least one surface of the metallic base, in which the metallic base includes a steel or aluminum material, and the anti-corrosive layer contains 0.001 to 1 g/m² of one or more substances selected from the group consisting of benzoic acid salts, glutamic acid salts, anisidines, glycine, and quinolinols. When a counterpart metal material is joined with the surface-treated metal material, one of the metallic base and the counterpart metal material is less noble in corrosion potential than the other, polarizes toward the anode, and behaves as a less noble metal. The specific substances constituting the anti-corrosive layer act upon the surface of the less noble metal to form an oxide film, a precipitated film, or a mixed film of them thereon to thereby reduce the dissolution rate of the less noble metal (i.e., one of the counterpart metal material and the metallic base). The joined articles of dissimilar materials according to embodiments of the present invention each include the surface-treated metal material(s). The anti-corrosive layer of the surface-treated metal material therefore advantageously prevents the galvanic corrosion of a less noble metal between the metallic base of the surface-treated metal material and the counterpart metal material. The present invention can therefore provide surface-treated metal materials and joined articles of dissimilar materials which excel in anti-corrosion properties against galvanic corrosion and in durability.

### BRIEF DESCRIPTION OF THE DRAWINGS

FIG. 1 is a schematic fragmentary sectional view of a surface-treated metal material according to an embodiment of the present invention;
FIG. 2 is a schematic fragmentary sectional view of a joined article of dissimilar materials according to a first embodiment;
FIG. 3 is a schematic fragmentary sectional view of a joined article of dissimilar materials according to a second embodiment;
FIG. 4 is a schematic fragmentary sectional view of a joined article of dissimilar materials according to a third embodiment;
FIG. 5 is schematic sectional view of a corrosion-testing assembly; and
FIG. 6 is a fragmentally sectional view taken along the line C of FIG. 5.

### DETAILED DESCRIPTION OF THE PREFERRED EMBODIMENTS

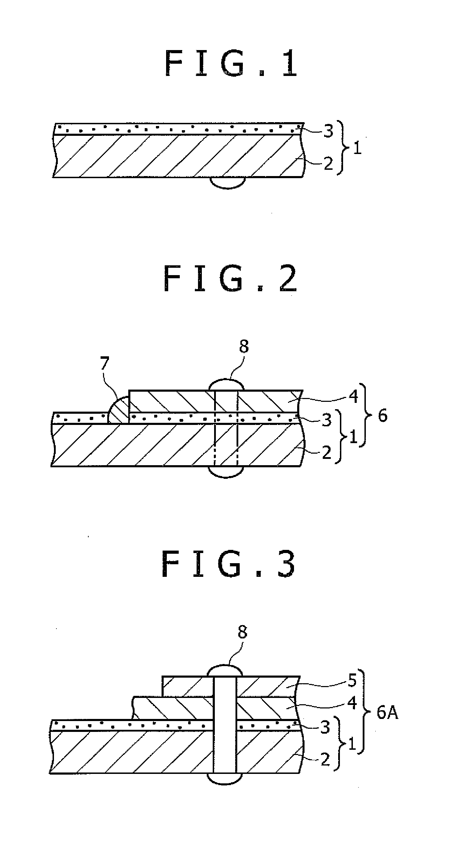

A surface-treated metal material according to an embodiment of the present invention will be illustrated in detail with reference to the attached drawings. With reference to FIG. 1, the surface-treated metal material 1 according to this embodiment includes a metallic base 2, and an anti-corrosive layer 3 covering a surface of the metallic base 2. In the exemplified surface-treated metal material 1 in FIG. 1, the anti-corrosive layer 3 covers only one side of the metallic base 2 but it may cover both sides of the metallic base 2.

The anti-corrosive layer 3 includes one or more substances selected from the group consisting of benzoic acid salts, glutamic acid salts, anisidines, glycine, and quinolinols. The benzoic acid salts and glutamic acid salts, when constituting the anti-corrosive layer 3, are respectively preferably at least one of potassium salt, sodium salt, and ammonium salt. These salts are more soluble in water than the other salts such as calcium salt and can thereby form an oxide film, a precipitated film, or a mixed film of them more uniformly. This more effectively reduces the dissolution rate of a less noble metal between the metallic base 2 of the surface-treated metal material 1 and the counterpart metal material, in which the counterpart metal material is arranged adjacent to the anti-corrosive layer 3 of the surface-treated metal material 1.

The glutamic acid includes two optical isomers (L-form and D-form). These two optical isomers show equivalent corrosion protective effects against galvanic corrosion, but salts of L-glutamic acid are recommended because they are generally more easily available. The anisidines include three isomers, i.e., ortho- (o-), meta- (m-), and para- (p-) isomers. These isomers show equivalent corrosion protective effects, but p-anisidine is recommended in view of cost.
The quinolinols include, for example, 2-quinolinol, 6-quinolinol, and 8-quinolinols, and these quinolinols show equivalent corrosion protective effects. However, 2-quinolinol, which is less harmful, is recommended from the viewpoint of safety.

The mass of coating of the specific substances in the anti-corrosive layer 3 is preferably a total of from 0.001 to 1 g/m². The specific substances, if coated in a mass of coating of less than 0.001 g/m², may not give sufficient anti-corrosion properties. This is because the concentration of the specific substances in a solution in a contact area between the surface-treated metal material and counterpart metal material becomes low, which solution is formed as a result typically of the invasion of water; whereby an oxide film, a precipitated film, or a mixed film of them shows insufficient anti-corrosion activities, which film is formed on the surface of a less noble metal between the metallic base of the surface-treated metal material and the counterpart metal material. The specific substances, if coated in a mass of coating of more than 1 g/m², may show saturated anti-corrosion properties and may adversely affect, for example, weldability upon welding of the counterpart metal material in contact with the surface-treated metal material. Accordingly, the mass of coating is preferably from 0.001 to 1 g/m² and more preferably from 0.005 g/m² to 0.9 g/m².

The anti-corrosive layer 3 can be formed by applying at least one of the specific substances to the metallic base. The substances can be applied according to any procedure not limited, and, for example, may be applied by dissolving the substances in a suitable solvent to give a solution, and applying the solution to the metallic base according to a suitable coating technique. Exemplary coating techniques include immersion coating, spray coating, shower coating, roll coating, and brush coating.

The metallic base 2 includes a steel or an aluminum material. Examples of the steel usable herein include regular steels such as steels for steel sheets and steels for mechanical structures, as well as various steels such as zinc-containing plated steels mentioned later. The shape of the steel is also not limited and can be any of shapes such as sheets including cold-rolled steel sheets and hot-rolled steel sheets, as well as C-shaped steels, H-shaped steels, and I-shaped steels. The aluminum material can be pure aluminum or any of aluminum alloys such as Al-Mn alloys, Al-Mg alloys, Al-Zn-Mg alloys, and Al-Si alloys. The steel or aluminum material constituting the metallic base 2 may be a solid metal or a surface-treated metal typically underwent a suitable surface treatment at least on a side where the anti-corrosive layer will be formed.

The metallic base 2 can be a zinc-containing plated steel which includes a steel and a zinc-containing plated layer covering at least one surface (the surface on which the anti-corrosive layer will be formed) of the steel. In this case, the content of zinc (Zn) in the zinc-containing plated layer is preferably 40 percent by mass or more. A surface-treated metal material using the zinc-containing plated steel as the metallic base helps to reduce the difference in potential when being in contact with a less noble metal than the steel. This further reduces the corrosion rate upon contact between the dissimilar metals as a result of synergistic effects of the zinc-containing plated layer and the anti-corrosive layer. The zinc-containing plated layer, if containing zinc in a content of less than 40 percent by mass, may not sufficiently help to reduce the difference in potential and may not effectively help to reduce the corrosion rate.

The zinc-containing plated layer can be formed by a plating technique such as hot-dip galvanization (hot-dip zinc plating), alloyed hot-dip galvanization (galvannealing), electrogalvanizing, as well as plating using an alloy of two or more elements including zinc, such as Zn-Al plating, Zn-Fe plating, Zn-Ni plating, Zn-Cr plating, or Zn-Mg plating. Independently, a dispersion plating technique can be employed in which another component such as metal oxide or polymer is dispersed in the zinc-containing plated layer. An example of this technique is a zinc plating in which SiO₂ is dispersed. The zinc-containing plated layer may also be a multilayer plated layer in which two or more of different zinc-containing plated layers are laminated.

The mass of coating of the zinc-containing plating is preferably from 1 to 150 g/m² per one side. The zinc-containing plating, if coated in a mass of coating of less than 1 g/m² per one side, may not so effectively reduce the difference in potential and may reduce the corrosion rate insufficiently. The zinc-containing plating, if coated in a mass of coating of more than 150 g/m² per one side, may show saturated effects of improving resistance against galvanic corrosion. The mass of coating of the zinc-containing plating is therefore preferably from 1 to 150 g/m² per one side. The mass of coating of the zinc-containing plating is more preferably from 3 g/m² to 70 g/m² per one side.

Next, a joined article of dissimilar materials according to a first embodiment of the present invention will be illustrated with reference to FIG. 2. In the joined article 6 of dissimilar materials according to the first embodiment, members the same as those of the surface-treated metal material 1 illustrated in FIG. 1 are indicated by the same reference numerals, and their explanation will be simplified or omitted.

The joined article 6 of dissimilar materials according to the first embodiment includes a surface-treated metal material 1 and a counterpart metal material 4 arranged adjacent to each other. The counterpart metal material 4 is arranged so as to be in contact with the surface of an anti-corrosive layer 3 of the surface-treated metal material 1. A metallic base 2 of the surface-treated metal material 1 is partially joined with the counterpart metal material 4 through a welded joint 7. These two members are electrically continuous to each other through the welded joint 7. In the joined article exemplified in FIG. 2, the metallic base 2 of the surface-treated metal material 1 and the counterpart metal material 4 are partially joined with each other by welding. The partial joining procedure is, however, not limited to welding and can be, for example, soldering (brazing), diffusion bonding, or the use of a metallic mechanical attachment member such as a rivet 8 as indicated by a chain double-dashed line in FIG. 2, or a bolt. However, welding such as arc welding or spot welding is recommended from the viewpoints of ensuring the bonding strength and securing reliability.

When a steel is used as the metallic base 2 of the surface-treated metal material 1, a less noble metal less noble in corrosion potential than the steel constituting the metallic base 2 is used as the counterpart metal material 4. Exemplary less noble metals usable herein include aluminum materials, magnesium alloys, and zinc alloys.

When an aluminum material is used as the metallic base 2 of the surface-treated metal material 1, a metal more noble in corrosion potential than the aluminum material constituting the metallic base 2 is used as the counterpart metal material 4. Exemplary more noble metals usable herein include steels and aluminum materials which are more noble than the metallic base.

In the joined article 6 of dissimilar materials according to the first embodiment, the metallic base 2 of the surface-treated metal material 1 is electrically continuously joined with the counterpart metal material 4. One of the metallic base 2 and the counterpart metal material 4 is less noble in corrosion potential than the other, polarizes toward the anode, and behaves as a less noble metal. Under such conditions, even if water invades in between the surface-treated metal material 1 and the counterpart metal material 4, the specific substances constituting the anti-corrosive layer 3 act on the surface of the less noble metal to form an oxide film, a precipitated film, or a mixed film of them thereon to suppress the dissolution of the less noble metal to thereby impede the galvanic corrosion. These improve the anti-corrosion properties and durability of the joined article 6 of dissimilar materials.

Next, a joined article 6A of dissimilar materials according to a second embodiment will be illustrated with reference to FIG. 3. The same members in FIG. 3 as those in the joined article 6 of dissimilar materials according to the first embodiment in FIG. 2 are indicated by the same reference numerals, their explanation will be omitted, and difference between the two embodiments will be mainly described.

The joined article 6A of dissimilar materials according to the second embodiment includes a surface-treated metal material 1; a counterpart metal material 4 arranged adjacent to the surface-treated metal material 1; and an outer metal material 5 arranged adjacent to the counterpart metal material 4 (opposite to the surface-treated metal material 1). These members are joined with each other through a rivet 8 in the joined article 6A exemplified in FIG. 3. The counterpart metal material 4 can also be called an intermediate metal between the surface-treated metal material 1 and the outer metal material 5 and is in contact both with the anti-corrosive layer 3 of the surface-treated metal material 1 and with the outer metal material 5. The metallic base 2 of the surface-treated metal material 1 is electrically continuous to the counterpart metal material 4 and to the outer metal material 5 both through the rivet 8. The rivet is used as a joining device in the joined article exemplified in FIG. 3, but the joining may be performed also by using an attachment member such as a bolt, or the metal materials may be partially joined with each other typically through welding.

The joined article 6A of dissimilar materials according to the second embodiment also effectively prevents the galvanic corrosion between the metallic base 2 of the surface-treated metal material 1 and the counterpart metal material 4. However, the outer metal material 5 preferably uses a material having a corrosion potential equal to or near to that of the counterpart metal material 4 so as to avoid the galvanic corrosion between the two members.

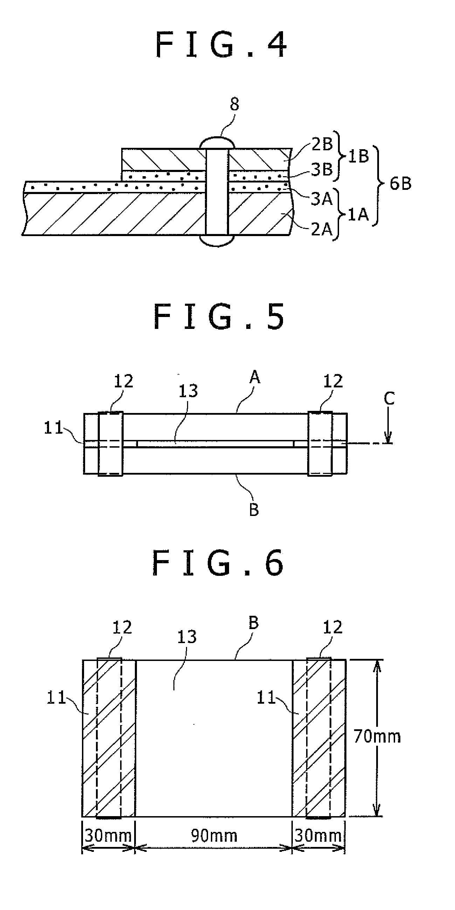

Next, a joined article 6B of dissimilar materials according to a third embodiment will be illustrated with reference to FIG. 4. The joined article 6B of dissimilar materials corresponds to the joined article 6 of dissimilar materials according to the first embodiment, except for using another surface-treated metal material (as with the embodiment in FIG. 1) as the counterpart metal material 4. Specifically, the joined article 6B includes a first surface-treated metal material 1A; and a second surface-treated metal material 1B arranged adjacent to the first surface-treated metal material 1A. The anti-corrosive layer 3A of the first surface-treated metal material 1A is arranged so as to be adjacent to and in contact with the anti-corrosive layer 3B of the second surface-treated metal material IB. The metallic base 2A of the first surface-treated metal material 1A is partially joined with metal member 2B of the second surface-treated metal material 1B through a rivet 8 in the joined article exemplified in FIG. 4, whereby the first metallic base 2A and the second metallic base 2B are electrically continuous to each other. The rivet is used as a joining device in the joined article exemplified in FIG. 4, but the joining may be performed also by using an attachment member such as a bolt, or the metal materials may be partially joined with each other typically through welding.

In the joined article 6B of dissimilar materials, the metallic base 2A of the first surface-treated metal material 1A includes a steel; and the metallic base 2B of the second surface-treated metal material 1B includes an aluminum material. The steel herein can be a zinc-containing plated steel.

Of the first metallic base 2A and the second metallic base 2B in the joined article 6B of dissimilar materials according to the third embodiment, the second metallic base 2B including the aluminum material is less noble in corrosion potential than the first metallic base 2A including the steel. The aluminum material as the less noble metal is protected from galvanic corrosion by double anti-corrosive layers, i.e., the anti-corrosive layer 3A of the first surface-treated metal material 1A and the anti-corrosive layer 3B of the second surface-treated metal material 1B, whereby the joined article 6B has excellent anti-corrosion properties and superior durability.

The joined article 6B of dissimilar materials according to the third embodiment may further include an intermediate metal material between the first and second surface-treated metal materials 1A and 1B. The material of the intermediate metal material may be less noble or more noble in corrosion potential than the metallic bases 2A and 2B of the surface-treated metal materials 1A and 1B. In this case, a pair of first surface-treated metal material 1A and the intermediate metal material; and a pair of the intermediate metal material and the second surface-treated metal material 1B can be regarded each as a joined article 6 of dissimilar materials according to the first embodiment.

Next, surface-treated metal materials and joined articles of dissimilar materials according to embodiments of the present invention will be further illustrated in detail with reference to several working examples below. It should be noted, however, that these examples are never construed to limit the scope of the present invention.

### Examples

### Preparation of Samples

As materials of the metallic base, cold-rolled steel sheets, coated steel sheets, sheets of aluminum materials, of magnesium alloys, and of zinc alloys as shown in Tables 1 and 2 below were prepared. These sheets had thicknesses of from 1.2 to 3.0 mm. Original sheets each 500 mm long and 500 mm wide were taken from the material sheets. Anti-corrosive layers composed of specific substances given in Tables 1 and 2 were formed through immersion to cover the original sheets, except for some of them, to thereby yield surface-treated metal materials as samples. The numbers of the aluminum materials, magnesium alloys, and zinc alloys in Table 2 are represented under Japanese Industrial Standards (JIS) designations JIS H4000-1999, JIS H4201-2005, and JIS H5301-1990.

Each of the anti-corrosive layers was formed in the following manner. Specifically, each original sheet was washed with acetone and thereafter immersed in a mixture of one or more specific substances given in Tables 1 and 2 and ion exchanged water at room temperature for a suitable duration. During immersion, the mixture was stirred with a magnetic stirrer so that the added substances were uniformly attached to the original sheet. The original sheet was then recovered from the mixture and dried, the increase in weight between before and after immersion was determined, and this was defined as the mass of coating of the specific substance(s). The mass of coating per unit area is also shown in Tables 1 and 2. Test specimens each 150 mm long and 70 mm wide were cut out from the original sheets coated with the specific substances and were subjected to corrosion tests below. Likewise, test specimens with the same dimensions were prepared from the metallic bases not underwent formation of anti-corrosive layer.

**TABLE 1**

| Test speimen | Metallic base | Mass of plated coating (g/m²) | Substance in anti-corrosive layer | Mass of anti-corrosive layer (g/m²) |
|---|---|---|---|---|
| N1 | cold-rolled steel sheet | - | - | - |
| 2 | hot-dip afuminum-coated steel sheet | 40 | - | - |
| N3 | electrolytic zinc-coated steel sheet | 20 | - | - |
| N4 | hot-dp zino-coatedsteel sheet | 70 | - | - |
| N5 | alloyed hot-dip zinc-coated steel sheet (Zn: 90%) | 45 | - | - |
| N6 | hot-dip Zn-Al coated steel sheet (Zn: 95%) | 60 | - | - |
| N7 | cold-rolled steel sheet | - | benzotriazole | 0.11 |
| N8 | cold-rolled steel sheet | - | calcium benzoate | 0.00049 |
| N9 | cold-rolled steel sheet | - | calcium benzoate | 0.0011 |
| N10 | cold-rdled steel sheet | - | calcium L-glutamate | 0.29 |
| N11 | hot-dip aluminum-coated steel sheet | 40 | p-anisdine | 0.50 |
| N12 | cold-rolled steel sheet | - | 2-inolinol | 0.49 |
| N13 | cold-rolled steel sheet | - | glycine | 0.45 |
| N14 | cold-rofled steel sheet | - | calcium benzoate glycine | 0.50 |
| N15 | cold-rolled steel sheet | - | potassium benzoate | 0.25 |
| N16 | hot-dip aluminum-coated steel sheet | - | sodium benzoate | 0.31 |
| N17 | cold-rdled steel sheet | - | benzoate ammonium | 0.28 |
| N18 | cold-rolled steel sheet | 60 | sodium L-glutamate | 0.30 |
| N19 | cold-rolled steel sheet | - | potassium benzoate o-anisidine | 0.56 |
| N20 | cald-rolled steel sheet | - | sodium benzoate 2-quinolinol glycine | 0.78 |
| N21 | alloyed hot-dip zinc-coated steel sheet (Zn: 90%) | 40 | calcium benzoate | 0.37 |
| N22 | alloyed hot-dip zinc-coated steel sheet (Zn: 90%) | 40 | magnesium benzoate | 0.79 |
| N23 | alloyed hot-dip zinc-coated steel sheet (Zn: 90%) | 40 | magnesium-glutamate-2-quinolinol | 0.99 |
| N24 | alloyed hot-dip zinc-coated steel sheet (Zn: 90%) | 40 | sodium benzoate | 0.29 |
| N25 | alloyed hot-dip zinc-coated steel sheet (Zn: 90%) | 40 | potassium L-glutamate | 0.45 |
| N26 | alloyed hot-dip zinc-coated steel sheet (Zn: 90%) | 40 | p-anisidne | 0.99 |
| N27 | electrolytic zinc-coatedsteel sheet | 20 | 2-quirdinol | 0.46 |
| N28 | hot-dip zinc-coated steel sheet | 70 | glycine | 0.24 |
| N29 | hot-dip Zn-Al coated steel sheet (Zn: 45%) | 50 | sodium benzoate | 0.33 |
| N30 | alloyed hot-dip zinc-coated steel sheet (Zn: 90%) | 135 | potassium benzoate | 0.48 |
| N31 | hot-dip Zn-Al coated steel sheet (Zn: 95%) | 40 | potassium L-glutamate | 0.26 |
| N32 | alloyed hot-dip zinc-coated steel sheet (Zn: 90%) | 25 | p-aniscline 8-quinolinol | 0.85 |

**TABLE 2**

| Test specimen | Metallic base | Substance in anti-corrosive layer | Mass of anti-corrosive layer (g/m²) |
|---|---|---|---|
| L1 | pure aluminum (1070) | - | - |
| L2 | Al-Cu alloy (2014) | - | - |
| L3 | Al-Mn alloy (3003) | - | - |
| L4 | Al-Mg alloy (5052) | - | - |
| L5 | Al-Mg-Si alloy (6061) | - | - |
| L6 | Al-Zn-Mg alloy (7075) | - | - |
| L7 | magnesium alloy (MP1B) | - | - |
| L8 | zinc alloy(ZDC1) | - | - |
| L9 | Al-Mg-Si alloy (6061) | calcium benzoate | 0.00046 |
| L10 | pure aluminum (1070) | calcium benzoate | 0.095 |
| L11 | AJ-Mn alloy (3003) | magnesium L-lutamate | 0.099 |
| L12 | Al-Mg alloy (5052) | p-anisdine | 0.22 |
| L13 | AJ-Mg-Si alloy (6061) | 2-quinolinol | 0.19 |
| L14 | Al-Mg-Si alloy (6061) | glycine | 0.33 |
| L15 | Al-Mg-Si alloy (6061) | magnesium benzoate p-anisdine | 0.26 |
| L16 | pure aluminum (1070) | potassium benzoate | 0.0010 |
| L17 | Al-Cu alloy (2014) | sodium L-glutamate | 0.20 |
| L18 | Al-Mg-Si alloy (6061) | sodium benzoate | 0.37 |
| L19 | Al-Mg alloy (5052) | sodium benzoate 2-quinolinol | 0.59 |
| L20 | A-Mg-Si alloy (6061) | sodium benzoate glycine | 0.28 |
| L21 | Al-Zn-Mg alloy (7075) | sodium L-glutamate p-anisicline 6-quinolinol | 0.99 |

### Corrosion Test Method

Each two types of the test specimens given in Tables 1 and 2 were chosen in combinations given in Table 3, from which samples of corrosion-testing assemblies as illustrated in FIGS. 5 and 6 were prepared. Using the samples, combined cyclic corrosion tests (CCT) were performed in accordance with the method specified in JASO Standards M609-91 by Society of Automotive Engineers of Japan (JAES).

Each of the corrosion-testing assemblies was prepared in the following manner. Initially, a test specimen A and another test specimen B were laid over each other so that the anti-corrosive layers of the two test specimens faced each other while sandwiching each one ply of a Teflon (registered trademark) sheet 11 at both ends of them. The Teflon sheet 11 was 30 mm wide, 70 mm long, and 0.3 mm thick. The test specimens A and B were then assembled by fixing with an electroconductive tape 12 so as to ensure continuity between them. Next, the assembled assembly was covered by a Teflon tape and a silicone sealant overall except for a gap 13 between the test specimens A and B.

The corrosion tests were performed in the following manner. The corrosion-testing assemblies were each subjected to 30 test cycles, in which one test cycle (a total of 8 hours) included a salt spray process for 2 hours; a drying process for 4 hours; and a wetting process for 2 hours. In the salt spray process, a 5% aqueous sodium chloride (NaCl) solution was sprayed to the assemblies at a temperature of 35°C so as to allow the aqueous sodium chloride solution to invade the gap 13 between the test specimens A and B. In the drying process, the assemblies were dried at a temperature of 60°C and relative humidity of 25%. In the wetting process, the assemblies were held at a temperature of 50°C and relative humidity of 98%. Intervals between adjacent two processes were set to 10 minutes.

Each three corrosion-testing assemblies as samples were prepared per one pair of test specimens. Corrosion tests were performed on respective samples, and the corrosion-testing assemblies were disassembled after the completion of the tests, and the erosion depths of a test specimen (test specimen B in Table 3) having a less noble metallic base were measured. The less noble metallic base corrodes preferentially as a result of contact. The depth of an assembly having a maximum erosion depth among the three corrosion-testing assemblies was defined as a "maximum erosion depth". Before the determination of erosion depths, corrosion products were removed according to the following technique. Specifically, the corrosion products were removed by immersion in a 10% aqueous diammonium hydrogen citrate solution heated at 80°C in assemblies including a steel as the base metal; by immersion in a 20% nitric acid solution at room temperature in assemblies including an aluminum material as the base metal; and by immersion in a 30% aqueous chromic acid solution at room temperature in assemblies including a magnesium alloy or a zinc alloy as the base metal.

### Test Results

Table 3 shows the maximum erosion depths determined as a result of the combined cyclic corrosion tests. Table 3 also shows evaluations in anti-corrosion properties. The anti-corrosion properties were evaluated in the following manner. In samples including a steel in combination with an aluminum material as the base metals (Samples Nos. 1 to 33, 38 to 55, and 59 to 63), the maximum erosion depth of Sample No. 1 was defined as a criterion value. In samples including a steel in combination with a magnesium alloy as the base metals (Samples Nos. 34 and 35), the maximum erosion depth of Sample No. 34 was defined as a criterion value. In samples including a steel in combination with a zinc alloy (Samples Nos. 36 and 37), the maximum erosion depth of Sample No. 36 was defined as a criterion value. In samples including an aluminum material and another aluminum material as the base metals (Samples Nos. 56 to 58), the maximum erosion depth of Sample No. 56 was defined as a criterion value. A sample having a maximum erosion depth of four-fifths or more of the criterion value was evaluated as having poor anti-corrosion properties (D); one having a maximum erosion depth of three-fifths or more and less than four-fifths of the criterion value was evaluated as having insufficient anti-corrosion properties (C); one having a maximum erosion depth of two-fifths or more and less than three-fifths of the criterion value was evaluated as having good anti-corrosion properties (B); one having a maximum erosion depth of one-fifth or more and less than two-fifths of the criterion value was evaluated as having excellent anti-corrosion properties (A); and one having a maximum erosion depth of less than one-fifth of the criterion value was evaluated as having very excellent anti-corrosion properties (AA)

**Table 3**

| Sample No. | Test specimen A | Test specimen B | Maximum erosion depth (µm) | Evaluation | Remarks |
|---|---|---|---|---|---|
| 1 | N1 | L5 | 48.9 | D | Comparative Example |
| 2 | N5 | L5 | 45.6 | D | Comparative Example |
| 3 | N7 | L5 | 32.0 | C | Comparative Example |
| 4 | N8 | L5 | 31.4 | C | Comparative Example |
| 5 | N9 | L5 | 22.0 | B | Example |
| 6 | N10 | L5 | 21.6 | B | Example |
| 7 | N11 | L5 | 205 | B | Example |
| 8 | N12 | L5 | 21.1 | B | Example |
| 9 | N13 | L5 | 20.9 | B | Example |
| 10 | N14 | L5 | 20.5 | B | Example |
| 11 | N15 | L5 | 18.1 | A | Example |
| 12 | N16 | L5 | 17.0 | A | Example |
| 13 | N17 | L5 | 18.0 | A | Example |
| 14 | N18 | L5 | 17.9 | A | Example |
| 15 | N19 | L5 | 17.0 | A | Example |
| 16 | N20 | L5 | 16.8 | A | Example |
| 17 | N21 | L5 | 14.8 | A | Example |
| 18 | N22 | L5 | 14.9 | A | Example |
| 19 | N23 | L5 | 14.5 | A | Example |
| 20 | N24 | Ll | 12.0 | A | Example |
| 21 | N24 | L2 | 112 | A | Example |
| 22 | N24 | L3 | 11.8 | A | Example |
| 23 | N24 | L4 | 11.8 | A | Example |
| 24 | N24 | L5 | 11.5 | A | Example |
| 25 | N24 | L6 | 12.3 | A | Example |
| 26 | N25 | L5 | 12.1 | A | Example |
| 27 | N26 | L5 | 11.6 | A | Example |
| 28 | N27 | L5 | 11.7 | A | Example |
| 29 | N28 | L5 | 11.9 | A | Example |
| 30 | N29 | L5 | 12.2 | A | Example |
| 31 | N30 | L5 | 11.5 | A | Example |
| 32 | N31 | L5 | 11.2 | A | Example |
| 33 | N32 | L5 | 11.3 | A | Example |
| 34 | N5 | L7 | 224.1 | D | Comparative Example |
| 35 | N24 | L7 | 68.0 | A | Example |
| 36 | N5 | L8 | 100.8 | D | Comparative Example |
| 37 | N24 | L8 | 30.2 | A | Example |
| 38 | N5 | L9 | 30.1 | C | Comparative Example |
| 39 | N5 | L10 | 14.1 | A | Example |
| 40 | N5 | L11 | 14.8 | A | Example |
| 41 | N5 | L12 | 14.5 | A | Example |
| 42 | N5 | L13 | 14.5 | A | Example |
| 43 | N5 | L14 | 14.3 | A | Example |
| 44 | N5 | L15 | 14.2 | A | Example |
| 45 | N5 | L16 | 11.9 | A | Example |
| 46 | N5 | L17 | 11.5 | A | Example |
| 47 | N1 | L18 | 20.8 | B | Example |
| 48 | N2 | L18 | 17.5 | A | Example |
| 49 | N3 | L18 | 11.6 | A | Example |
| 50 | N4 | L18 | 11.4 | A | Example |
| 51 | N5 | L18 | 11.2 | A | Example |
| 52 | N6 | L18 | 11.3 | A | Example |
| 53 | N5 | L19 | 10.9 | A | Example |
| 54 | N5 | L20 | 10.8 | A | Example |
| 55 | N5 | L21 | 10.5 | A | Example |
| 56 | L2 | L5 | 39.8 | D | Comparative Example |
| 57 | L2 | L18 | 13.1 | A | Example |
| 58 | L17 | L18 | 9.9 | A | Example |
| 59 | NlO | LlO | 9.5 | AA | Example |
| 60 | N16 | L13 | 8.9 | AA | Example |
| 61 | N16 | L16 | 8.0 | AA | Example |
| 62 | N22 | L18 | 7.1 | AA | Example |
| 63 | N24 | L18 | 6.5 | AA | Example |

The data in Table 3 demonstrate as follows. Sample No. 1 as a comparative example is a combination of a test specimen (N1) containing a cold-rolled steel sheet without anti-corrosive layer and a test specimen (L5) containing an A1-Mg-Si alloy sheet without anti-corrosive layer and showed erosion with a maximum erosion depth of more than 40 µm in the test specimen L5. Sample No. 2 as a comparative example is a combination of a test specimen (N5) containing an alloyed hot-dip zinc-coated (galvannealed) steel sheet without anti-corrosive layer and the test specimen L5 The sample of this combination also showed erosion with a maximum erosion depth of more than 40 µm in the test specimen L5. Sample No. 3 is a combination of a test specimen (N7) containing a cold-rolled steel sheet coated with a common anticorrosive benzotriazole and the test specimen L5. Sample No. 4 is a combination of a test specimen (N8) and the test specimen L5, which test specimen (N8) has a mass of coating of the specific substances lower than that specified in the present invention. Both Samples No. 3 and No. 4 have insufficient corrosion resistance, although showing somewhat smaller maximum erosion depths in the test specimen L5.

In contrast, Samples Nos. 5 to 33 according to embodiments of the present invention each include a steel with an anti-corrosive layer as the test specimen A, showed maximum erosion depths one half or less of that of Sample No. 1 or Sample No. 2, and thereby exhibit effective corrosion protective effects.

Samples No. 34 and No. 36 as comparative examples are combinations of a test specimen containing an alloyed hot-dip zinc-coated steel sheet without anti-corrosive layer and a test specimen containing a magnesium alloy sheet or zinc alloy sheet without anti-corrosive layer. They showed significant erosion with maximum erosion depths of more than 100 µm. In contrast, Samples No. 35 and No. 37 using test specimens each containing an alloyed hot-dip zinc-coated steel sheet coated with an anti-corrosive layer showed maximum erosion depths in the magnesium alloy sheet and zinc alloy sheet of less than two-fifths of those of Samples No. 34 or No. 36, respectively, indicating excellent corrosion protective effects.

Samples No. 39 to No. 55 are combinations of a test specimen containing an aluminum material coated with an anti-corrosive layer in a specific amount and a test specimen containing a steel without anti-corrosive layer. These showed maximum erosion depths in the aluminum material of one half or less of the criterion value. Samples No. 56 to No. 58 use aluminum materials both as the base metals of the test specimens A and B. By forming an anti-corrosive layer in either one or both of the test specimens A and B, the resulting samples showed excellent corrosion protective effects. Of these samples, Sample No. 58 having an anti-corrosive layer in both the test specimens A and B showed a maximum erosion depth of about one-fourth of that of Sample No. 56 having no anti-corrosive layer both in the test specimens A and B. Likewise, Samples No. 59 to No. 63 having an anti-corrosive layer both in the test specimens A and B showed maximum erosion depths of less than one-fifth of that of Sample No. 1 or No. 2, indicating remarkable corrosion protective effects.

In addition, a comparison was made between Sample No. 5 and Sample No. 17, in which Sample No. 5 used a cold-rolled steel sheet coated with calcium benzoate as the test specimen A; and Sample No. 17 used a cold-rolled steel sheet coated with ammonium benzoate as the test specimen A. The comparison demonstrates that the ammonium salt gives a smaller maximum erosion depth and larger corrosion protective effects than those of the calcium salt. Likewise, a comparison was made between Sample No. 6 and Sample No. 18, in which Sample No. 6 used a cold-rolled steel sheet coated with calcium L-glutamate as the test specimen A; and Sample No. 18 used a cold-rolled steel sheet coated with sodium L-glutamate as the test specimen A. This comparison demonstrates that the sodium salt gives a smaller maximum erosion depth and larger corrosion protective effects than those of the calcium salt. Likewise, comparisons were made of Samples No. 17 and No. 18 with Samples No. 24 and No. 31, where Samples No. 17 and No. 18 used alloyed hot-dip zinc-coated steel sheets coated with calcium benzoate and magnesium benzoate, respectively, as the test specimen A; and Sample No. 24 and No. 31 used alloyed hot-dip zinc-coated steel sheets coated with sodium benzoate and potassium benzoate, respectively, as the test specimen A. The comparisons demonstrate that the sodium salt and potassium salt give smaller maximum erosion depths and larger corrosion protective effects than those of the calcium salt and magnesium salt. As is apparent from these results, potassium salt, sodium salt, and ammonium salt of benzoic acid and L-glutamic acid are preferred when used as the specific substances to form anti-corrosive layers.

Independently, comparisons were made in samples using steel sheets covered with plated layers as the metallic bases, in which these metallic bases were coated with the same substance, i.e., sodium benzoate, as an anti-corrosive layer. As a result, Sample No. 30 using a hot-dip Zn-Al-coated steel sheet (Zn content: 45%) as the test specimen A and Sample No. 24 using an alloyed hot-dip zinc-coated steel sheet (Zn content: 90%) as the test specimen A showed remarkably smaller maximum erosion depths than that of Sample No. 12 using a hot-dip aluminum-coated steel sheet as the test specimen A. These results demonstrate that the metallic base, if having a plated layer, preferably has a zinc content in the plated layer of 40% or more.

As has been described above, the surface-treated metal materials according to embodiments of the present invention each excel in anti-corrosion properties against galvanic corrosion.and are advantageously useful as surface-treated metal material using a steel or aluminum material as a base metal to be in contact with a dissimilar metal. The joined articles of dissimilar materials using these surface-treated metal materials also excel in anti-corrosion properties against galvanic corrosion.

## Claims

1. A surface-treated metal material excellent in resistance against galvanic corrosion, which is to be joined with a counterpart metal material less noble in corrosion potential than a steel, the surface-treated metal material comprising:
a metallic base including the steel; and
an anti-corrosive layer covering at least one surface of the metallic base,
wherein the anti-corrosive layer contains a total of 0.001 to 1 g/m² of one or more substances selected from the group consisting of benzoic acid salts, glutamic acid salts, anisidines, glycine, and quinolinols.

2. The surface-treated metal material according to claim 1, wherein the anti-corrosive layer contains at least one selected from the group consisting of potassium salts, sodium salts, and ammonium salts as the benzoic acid salts and/or glutamic acid salts.

3. The surface-treated metal material according to claim 1,
wherein the metallic base is a zinc-containing plated steel including the steel and a zinc-containing plated layer present on at least one surface of the steel, the zinc-containing plated layer containing 40 percent by mass or more of zinc and being present in a mass of coating of from 1 to 150 g/m², and
wherein the anti-corrosive layer is present adjacent to the zinc-containing plated layer.

4. The surface-treated metal material according to any one of claims 1 to 3, as a material for automotive members.

5. A surface-treated metal material excellent in resistance against galvanic corrosion, which is to be joined with a counterpart metal material being more noble in corrosion potential than pure aluminum or an aluminum alloy, the surface-treated metal material comprising:
a metallic base including the pure aluminum or aluminum alloy;
and
an anti-corrosive layer covering at least one surface of the metallic base,
wherein the anti-corrosive layer contains a total of 0.001 to 1 g/m² of one or more substances selected from the group consisting of benzoic acid salts, glutamic acid salts, anisidines, glycine, and quinolinols.

6. The surface-treated metal material according to claim 5, wherein the anti-corrosive layer contains at least one selected from the group consisting of potassium salts, sodium salts, and ammonium salts as the benzoic acid salts and/or glutamic acid salts.

7. The surface-treated metal material according to one of claims 5 and 6, as a material for automotive members.

8. A joined article of dissimilar materials, the joined article comprising:
a surface-treated metal material; and
a counterpart metal material at least partially joined with the surface-treated metal material,
wherein the surface-treated metal material is the surface-treated metal material according to claim 1,
wherein the counterpart metal material is a less noble metal less noble in corrosion potential than the metallic base of the surface-treated metal material,
wherein the counterpart metal material is present adjacent to the anti-corrosive layer of the surface-treated metal material, and
wherein the metallic base of the surface-treated metal material is electrically continuously joined with the counterpart metal material.

9. The joined article of dissimilar materials according to claim 8, wherein the less noble metal is one selected from the group consisting of pure aluminum, aluminum alloys, magnesium alloys, and zinc alloys.

10. A joined article of dissimilar materials, the joined article comprising:
a surface-treated metal material; and
a counterpart metal material at least partially joined with the surface-treated metal material,
wherein the surface-treated metal material is the surface-treated metal material according to claim 5,
wherein the counterpart metal material is a more noble metal being more noble in corrosion potential than the metallic base of the surface-treated metal material,
wherein the counterpart metal material is present adjacent to the anti-corrosive layer of the surface-treated metal material, and
wherein the metallic base of the surface-treated metal material is electrically continuously joined with the counterpart metal material electrically continuously.

11. The joined article of dissimilar materials, according to claim 10, wherein the more noble metal is one selected from the group consisting of aluminum alloys and steels.

12. A joined article of dissimilar materials, the joined article comprising:
a first surface-treated metal material; and
a second surface-treated metal material at least partially joined with the first surface-treated metal material,
wherein the first surface-treated metal material is the surface-treated metal material according to claim 1, and the second surface-treated metal material is the surface-treated metal material according to claim 5,
wherein the anti-corrosive layer of the second surface-treated metal material is present so as to be in contact with or face the anti-corrosive layer of the first surface-treated metal material, and
wherein the metallic base of the first surface-treated metal material is electrically continuously joined with the metallic base of the second surface-treated metal material.

13. The joined article of dissimilar materials, according to any one of claims 8 to 12, as a material for automotive members.
